# EUROPÄISCHE PATENTSCHRIFT

(11) **EP 1 185 587 B1**
(45) Veröffentlichungstag und Bekanntmachung des Hinweises auf die Patenterteilung: **19.02.2003**
(21) Anmeldenummer: 00926529.9
(22) Anmeldetag: 19.05.2000
(51) Int. Cl.: C08L 97/02

(54) **HOLZFASER-HALBTEIL SOWIE VERFAHREN ZU DESSEN HERSTELLUNG**
WOOD-FIBRE SEMI-FINISHED PRODUCT AND METHOD FOR PRODUCING THE SAME
PRODUIT SEMI-FINI EN FIBRES DE BOIS ET SON PROCEDE DE PRODUCTION

(30) Priorität: 20.05.1999 AT 89699
(43) Veröffentlichungstag der Anmeldung: 13.03.2002
(73) Patentinhaber: FUNDER INDUSTRIE GESELLSCHAFT M.B.H., A-9300 St. Veit a.d. Glan (AT)
(72) Erfinder: BARBU, Marius, C., A-1030 Wien (AT); RESCH, Helmuth, J., A-1130 Wien (AT); WENINGER, Werner, A-9330 Treibach (AT)
(74) Vertreter: Dungler, Karin
(86) Internationale Anmeldenummer: AT0000142
(87) Internationale Veröffentlichungsnummer: WO00071620

(56) Entgegenhaltungen:
- EP-A- 0 081 147
- WO-A-92/12836
- GB-A- 1 115 942

## Beschreibung

Die Erfindung betrifft ein Holzfaser-Halbteil, der gepreßte Holzfasern enthält, die von hitzehärtbaren Kondensationsharzen umgeben sind, ein Verfahren zu dessen Herstellung sowie eine Holzfaser-Compactplatte bestehend aus diesen Halbteilen.

Holzfaser-Halbteile, insbesondere in Form von Platten, werden aus Holzfasern oder Lignocellulose-hälftigem Fasermaterial hergestellt. Diese Ausgangsmaterialien werden durch Einwirkung von Wärme, Feuchtigkeit und mechanischen Druckkräften in Zerfaserungsanlagen in Einzelfasern oder Faserbündel zerlegt. Im Verlauf des weiteren Herstellungsprozesses wird das Fasermaterial mit Kondensationsharzen beleimt, anschließend getrocknet und zu Matten vorgeformt. Diese vorgeformten Matten werden in der Folge vorverdichtet und gepreßt. Je nach Schüttgewicht der Fasermatte und angewandtem Preßdruck können nunmehr nach DIN 68753/1976 harte Holzfaserplatten, sogenannte HFH-Platten, mit einer Rohdichte von mehr als 800 kg/m³, sowie mitteldichte Holzfaserplatten, sogenannte MDF-Platten, mit einer Dichte in einem Bereich von 350 kg/m³ bis 800 kg/m³ hergestellt werden.

Die vorgenannten MDF-Platten werden in der Innenanwendung, insbesondere als Sichtelemente im Möbelbau, beispielsweise als dreidimensional gefräste Platten, als Paneele für Decken- und Wandverkleidungen sowie in der Türenfertigung als sogenannte "Doorskins" eingesetzt.

Die HFH-Platten können aufgrund ihrer hohen Dichte auch in der Baubranche, beispielsweise als Dachunterkonstruktionen oder im Fußbodenbereich als Trägerplatten für sogenannte Laminatböden, Anwendung finden.

Für besonders hohe Anforderungen an die Platte hinsichtlich Naßfestigkeit, Dimensionsstabilität der Platte sowohl in Längs- als auch in Querrichtung bei Klimawechsel, geringe Quellwerte und geringe Wasseraufnahme insbesondere im Kantenbereich, Biegefestigkeit und Biege E-Modul nach EN 438/1 für dekorative "High Pressure Laminates" sind jedoch die für den Innenausbau nach EN 622/5 hergestellten Platten nicht bzw. nur bedingt geeignet. Platten mit Qualitätsanforderungen entsprechend EN 438/1 werden nämlich in vielfältiger Form für die Außenanwendung, beispielsweise mit dekorativer Oberfläche als Balkon- und Fassadenverkleidung, aber auch im Innenbereich, beispielsweise als Möbel für den Naßbereich verwendet.

Um die Ansprüche entsprechend EN 438/1 zu erfüllen, arbeitet man vorzugsweise mit Schichtpreßstoffen, bestehend aus mehreren Lagen von mit Kondensationsharzen imprägnierten Papieren. Deren Herstellung erfolgt bei erhöhtem Druck und erhöhter Temperatur, so daß die endgefertigten Platten als sogenannte "High Pressure Laminates" (HPL) bezeichnet werden. Diese HPL-Platten sind durch äußerst zufriedenstellende mechanische Festigkeits- sowie zufriedenstellende Naßfestigkeitswerte ausgezeichnet. Die mechanischen Festigkeitswerte können insbesondere dadurch beeinflußt werden, daß eine hohe Anzahl von mit Kondensationsharzen imprägnierten Papieren im Herstellungsprozeß eingesetzt werden.

Die anhand dieser Verfahren erzeugten Schichtpreßstoffe haben jedoch den Nachteil einer relativ geringen Dimensionsstabilität bei wechselnden Klimabedingungen. Die Ursache für diese nicht befriedigende Dimensionsstabilität liegt wahrscheinlich in der Struktur der Kernschicht dieser bekannten Schichtpreßstoffe, da diese aus Natronkraftpapieren gebildet wird. Natronkraftpapiere bestehen aus Fasern, die zu 60-80% in Längsrichtung und zu 20 bis 40% in Querrichtung zur in Längsrichtung der Papierbahn angeordnet sind. Die überwiegende Orientierung der Fasern in Längsrichtung der Papierbahn hat zur Folge, daß die Schichtpreßstoffe unter wechselnden Klimabedingungen in Längs- und Querrichtung starken Dimensionsänderungen unterliegen.

So wird beispielsweise in der EP-A-35 133 ein Verfahren zur Herstellung von dekorativen HPL-Laminaten beschrieben, bei welchem eine Kernschicht aus mit Phenol-Formaldehydharzen imprägnierten, celluloseartigen Fasern gebildet wird. Der Harzanteil beträgt dabei 20-35 Gew.%; die celluloseartigen Fasern weisen durchschnittlich eine Länge von 0,5-2,5 mm auf. An diese Kernschicht schließen weiters Lagen aus wenigstens einem Dekorpapier sowie einem transparenten Deckblatt an.

Ferner wird in der EP-A-81 147 die Herstellung von dekorativen Bauplatten für die Außenanwendung beschrieben, wobei eine Kernschicht aus Holz- und/oder Zellulosefasern mit einer maximalen Länge von 20 mm gebildet wird und wobei diese Fasern mit einem hitzehärtbaren Phenol-Formaldehydharz in wäßriger Lösung beschichtet sind, so daß ein Harzanteil von mehr als 150-900 g pro 1000 g Trockenfasern erzeugt wird. Die Dichte dieser Bauplatten liegt in einem Bereich von 1100-1500 kg/m³.

Für die Herstellung der Kernschicht ist gemäß dieser bekannten Verfahren ein relativ hoher Anteil an Phenol-Formaldehydharz bezogen auf die eingesetzten Natronkraftpapiere bzw. atro-Holzfasern notwendig, der einerseits, bedingt durch die Emission von freien Phenolen bzw. monomeren Phenolverbindungen eine aufwendige Belüftung bzw. Absaugung der Produktionsanlagen zur Erreichung der von Umweltbehörden geforderten MAK-Werte und andererseits, bedingt durch Imprägnierung und Trocknung der eingesetzten Natronkraftpapiere bzw. Trocknung und Hitzehärtung der Holzfasern eine thermische Nachverbrennung der phenolhältigen Abluft mit hohen Kosten zur Folge hat.

Aufgabe der vorliegenden Erfindung ist es, diese vorbekannten Nachteile betreffend Produkteigenschaften und Verfahrensführung zu vermeiden.

Erfindungsgemäß wird ein Holzfaser-Halbteil der eingangs genannten Art vorgeschlagen, welches dadurch gekennzeichnet ist, daß der Beleimungsgrad der Holzfasern 30 bis 60% Festharz in Form von Kondensationsharzgemischen oder Mischkondensationsharzen (Copolymerisaten) bezogen auf 100% atro-Fasern beträgt, wobei der Festharzanteil an Melamin-Formaldehydharz als Kondensationsharz maximal 45%, bezogen auf atro-Holzfasern, und der Festharzanteil an Phenol-Formaldehydharz als weiteres Kondensationsharz kleiner als 15%, bezogen auf atro-Holzfasern, beträgt und daß die mit hitzehärtbaren Melamin- und Phenol-Formaldehydharzen umgebenen Holfasern zusätzlich mit einer Wachsschicht umhüllt sind.

Besonders zufriedenstellend löst man diese Aufgabe durch Verwendung von Melamin-Formaldehydharzen mit einem Kondensationsgrad - gemessen an der Kaltwasserverträglichkeit - von 1,4 bis 1,6.

Niedrigere Emissionswerte hinsichtlich monomerer Phenolverbindungen können erreicht werden, wenn Phenol-Formaldehydharze mit einem Anteil von maximal 0,5% freiem Phenol und einer B-Zeit von 48 s verwendet werden. Die B-Zeit ist jene Zeit, in der flüssiges Phenol-Formaldehydharz bei 150°C durch Polykondensation in einen festen, nicht mehr schmelz- und quellbaren Zustand, den sogenannten C-Zustand, übergeht.

Durch die Reduzierung des Fhenol-Formaldehydharzanteiles im erfindungsgemäß eingesetzten Kondensationsharzgemisch oder Mischkondensationsharz (Coplymerisat) werden keinerlei nachgeschaltete Luftreinigungs- bzw. Luftverbrennungsverfahren benötigt.

Als besonders vorteilhaft für eine gleichmäßige Faserorientierung in Längs- und Querrichtung hat sich ferner die an sich bekannte Luftstreuvorrichtung zur Erzeugung von kontinuierlichen und gleichförmigen Fasermatten erwiesen, wenn das erfindungsgemäße Holzfaser-Halbteil Holzfasern mit einer durchschnittlichen Länge von 1,0 bis 1,4 mm und einem mittleren Durchmesser von 0,02 mm aufweist. Dadurch wird sowohl in Längs- als auch in Querrichtung des Holzfaser-Halbteils eine zufriedenstellende Dimensionsstabilität bei wechselnden Klimabedingungen erreicht.

Sehr gute Festigkeitswerte werden ferner beim erfindungsgemäßen Holzfaser-Halbteil dann erzeugt, wenn dessen Dichte in einem Bereich von 800-1000 kg/m³ liegt.

Zur Herstellung des vorgenannten erfindungsgemäßen Holzfaser-Halbteils wird das Rohmaterial einer Zerfaserung unterworfen, anschließend in einer Blasleitung mit Kondensationsharzen beleimt und das so erhaltene beleimte Fasermaterial nach Trocknung auf die erforderliche Restfeuchte zu Mattenbahnen gestreut und unter Druck und Temperatur zum Halbteil verpreßt. Erfindungsgemäß wird bei diesem Verfahren innerhalb der Blasleistung ein Beleimungsgrad der Holzfasern von 30 - 60% Festharz in Form von Kondensationsharzgemischen oder Mischkondensations-harzen (Copolymerisaten) erzeugt, wobei die Harze innerhalb der Blasleitung derart auf den Holzfasern verteilt werden, daß der Festharzanteil an Melamin-Formaldehydharz als Kondensationsharz maximal 45% und der Festharzanteil an Phenol-Formaldehydharz als weiteres Kondensationsharz kleiner als 15% bezogen auf atro-Holz beträgt, und wobei in der Blasleitung eine Wachsemulsion auf die mit Melamin- und Phenol-Formaldehydharzen beleimten Fasern aufgetragen wird.

Vorteilhafterweise erfolgt der Auftrag an Melamin- und Phenol-Formaldehydharzen in der Blasleitung in Form einer Mischung oder nacheinander als Einzelkomponenten oder in Form von Mischkondensationsharzen (Copolymerisaten).

Die Restfeuchte nach Trocknung der beleimten Holzfasern beträgt in einer bevorzugten Ausführungsform mindestens 16%. Dies ist einerseits zur raschen Wärmeübertragung während des Preßvorganges zur Ausbildung des Holzfaser-Halbteils und andererseits zur Erreichung einer Restfeuchte von max. 8% im endgefertigten Halbteil vorteilhaft. Holzfaser-Halbteile mit bis zu 8% Restfeuchte stellen sicher, daß die Kondensationsharze noch nicht den C-Zustand erreicht haben, was erst in einem weiteren Verarbeitungsschritt erwünscht und notwendig ist. Der Grad der Harzkondensation kann über die Restfeuchte des Holzfaser-Halbteils kontrolliert und eingestellt werden.

Die plattenförmigen, durch Schleifen kalibrierten, auf Formate geschnittenen und durch Lagerung klimatisierten Holzfaser-Halbteile können erfindungsgemäß einzeln oder in Form eines Mehrschichtaufbaus zu dekorativen Fasercompactplatten mit ein- oder mehrlagigen Dekorpapieraufbau auf Melaminharzbasis beispielsweise in einer Mehretagen-Rückkühlpresse unter ähnlichen Bedingungen wie klassische HPL-Platten verpreßt werden. Besonders vorteilhaft ist die Verwendung von phenol imprägnierten Natronkraftpapieren im Preßstapel als sogenannte Verbundfilme zwischen den einzelnen Holzfaser-Halbteilen um diese durch Heißhärtung wasserabweisend zu verbinden.

Der Vorteil bei der Verwendung der erfindungsgemäßen Holzfaser-Halbteile zur Herstellung der erfindungsgemäßen dekorativen Fasercompactplatten besteht auch darin, daß durch Nachverdichtung bis zu 1400 kg/m³ und durch Erreichen des C-Zustandes der eingesetzten Kondensationsharne unter Druck und Temperatur während der dekorativen Beschichtung auf Mehretagen-Rückkühlpressen, zufriedenstellende mechanische Festigkeits- sowie Naßfestigkeitswerte der endgefertigten Fasercompactplatten erzeugt werden können.

Die Erfindung wird nunmehr anhand einer Verfahrensskizze sowie Ausführungsbeispielen näher erläutert.

### Beispiel 1:

Es werden in an sich bekannter Weise Hackschnitzel, welche zu 50% aus Buche und zu 50% aus Fichte bestehen, hergestellt. Der Einsatz von Fichten- und Buchenholz ist insoferne günstig, weil beide Holzarten einen relativ hohen Sklerenchymfaseranteil (Festigkeitsgewebe) haben, und dadurch eine bessere Faserstoffausbeute ermoglicht wird. Der bevorzugte Einsatz von Buchenholz bringt auf Grund der spezifischen Fasereigenschaften, wie geringe Länge und niedriger Durchmesser sowie erhöhtes spezifisches Gewicht, eine wesentliche Verbesserung der Oberflächen- und Kantenqualität bei gleichzeitiger Optimierung der physikalischen Eigenschaften, insbesondere der Quellwerte und der Wasseraufnahme.

Verfahrensgemäß werden nunmehr die Hackschnitzel über einen Wäscher 1 und eine Entwässerungsschnecke 2 einem Hackguttrichter 3a zugeführt, aus welchem sie über eine Pfropfenschnecke 3b einem Vorwärmer 3c aufgegeben werden. Im Vorwärmer 3c werden die Hackschnitzel etwa 5 Minuten mit Wasserdampf bei einem Druck von 8 bis 12 bar thermomechanisch behandelt und anschließend in einem Defibrator 3d auf Fasern mit einer Länge von 0,1 bis 22 mm zerfasert. Die Faserzusammensetzung besteht zu 60 bis 80% aus Fasern mit einer Länge von 0,5 bis 3 mm, zu ca. 19 bis 39% aus Fasern mit einer Länge von kleiner als 0,5 mm (fines) und zu ca. 1,0% aus Fasern mit einer Länge von 3 bis größer 20 mm (shives). Die durchschnittliche Länge der Fasern beträgt ca. 1,0 bis 1,4 mm.

Die so hergestellten, losen bzw. gebündelten, nassen Fasern werden aus dem Defibrator 3d über eine Blasleitung 4 in einem sehr turbulenten Strom bei ca. 6 bis 8 bar in der Blasleitung und mit einer Geschwindigkeit von 50 bis 100 m/s in einen Trockner 5 transportiert. Die Beleimung findet in der Blasleitung 4, beispielsweise in einer ganz bestimmten Reihenfolge, statt. Zuerst werden, bezogen auf atro-Holzfasern, 75% flüssiges Melaminformaldehydharz mit einem Festkörperanteil von 50% (das sind 37,5% Festharz bezogen auf atro-Holz) über eine Düse 4a zur Imprägnierung bzw. Fasersättigung eingespritzt. Anschließend werden 35,7% flüssiges Phenol-Formaldehydharz mit einem Festkörperanteil von 35% (das sind 12,5% Festharz bezogen auf atro-Holz) über eine Düse 4b, die in einem Abstand von 4 m von der ersten Düse (4a) angeordnet ist, zur Ummantelung der bereits imprägnierten bzw. gesättigten Fasern eingetragen. Über eine Düse 4c, welche sich in einem Abstand von 4 m von der Düse 4b befindet, werden bezogen auf die Fasern 4% flüssige Wachsemulsion mit einem Feststoffgehalt von 50% (2% Festwachs bezogen auf atro-Holz) als Hydrophobierungs- bzw. Trennmittel eingebracht.

Die mit Melamin-Formaldehydharz imprägnierten, mit Phenol-Formaldehydharz ummantelten und mit einer Wachsemulsion versetzten, nassen Fasern werden anschließend in dem Trockner 5 mittels Heißluftstrom bei 100° bis 140°C und einer Luftgeschwindigkeit von 10 bis 30 m/s auf 16% Restfeuchte getrocknet. Die getrockneten Fasern werden in einem Faserbunker 6 gelagert und anschließend mittels einer Luftstreumaschine 7 kontinuierlich in Form einer gleichmäßigen Fasermatte auf eine Formstraße 8a gestreut und in einer Vorpresse 8b auf ein Fünftel des ursprünglichen Volumens kalt vorverdichtet. Mittels einer Besprühungseinrichtung 8e werden jeweils 1% Wasser, bezogen auf das Mattengewicht, auf der Unter- und Oberseite der Fasermatte gleichmäßig aufgetragen. Die kalt vorverdichtete und befeuchtete Fasermatte 12 wird, nachdem sie gegebenenfalls einen Metalldetektor 8d passiert hat und in einer Besäumungsstation 8c randseitig bearbeitet wurde, in einer kontinuierlichen Heißpresse 9 bei einem Druck von 15 bis 30 bar und einer Temperatur zwischen 180° bis 200°C zu hochverleimten Holzfaser-Halbteilen mit einer Dichte von 850 ±50 kg/m³, einer Restfeuchte von 8%, gepreßt, formatiert und auf eine Dicke von 3,0 mm kalibriert.

In einer weiteren Besäumungsstation 10 und einer Schneidstation 11 wird das auf eine Dicke von beispielsweise 3 mm kalibrierte Holzfaser-Halbteil 13 formatiert. Die derart hergestellten Holzfaser-Halbteile 13 werden durch Lagerung klimatisiert und dann weiteren, in der Verfahrensskizze nicht dargestellten Verarbeitungsstufen zur Erlangung eines Holzfaser-Compactproduktes zugeführt werden.

Diese Holzfaser-Halbteile 13 können für die Herstellung von dekorativen Fasercompactplatten, welche in Mehretagen-Rückkühlpressen bei einer Temperatur von beispielsweise 145°C und einem Druck von beispielsweise 55 kp/cm² durchgeführt wird, eingesetzt werden.

Zur Herstellung einer dekorativen Fasercompactplatte mit einer Dicke von 9 mm werden drei, auf 3 mm Dicke kalibrierte und formatierte Holzfaser-Halbteile verwendet. Als Verbindungsschicht zwischen den einzelnen Lagen werden beispielsweise mit Phenol-Formaldehydharz imprägnierte Kraftpapiere eingesetzt.

Zur Ausbildung der dekorativen Außenschichten werden an sich bekannte, mit Melaminharz imprägnierte Dekorpapiere eingesetzt. Zur Erhöhung der Abriebfestigkeit können über diese noch sogenannte Overlay-Papiere gelegt werden.

Die so hergestellte, dekorative Holzfasercompactplatte weist eine Dichte von 1205 kg/m³ sowie eine Biegefestigkeit von 106 MPa auf. Diese Werte entsprechen üblichen, in der Bau- und Möbelbranche eingesetzten HPL-Schichtstoffen Type S, EN438/1.

Ferner weist die Holzfasercompactplatte eine nur geringe Wasseraufnahme auf, was auf die Faserimprägnierung und die mehrfache Ummantelung der Fasern, durch die eingesetzten Melamin- und Phenol-Formaldehydharze während der Beleimung sowie die zusätzliche Beschichtung mit einer Wachsemulsion zurückzuführen ist.

### Beispiel 2:

Es werden Holzfaser-Halbteile und anschließend dekorative Holzfasercompactplatten, wie in Beispiel 1 angeführt, hergestellt, wobei von demselben Gesamtbeleimungsgrad (50% Festharz bezogen auf atro-Holz) und demselben Leimmischungsverhältnis ausgegangen wird. Der Unterschied zu Beispiel 1 besteht darin, daß Melamin- und Phenol-Formaldehydharz vor der Beleimung in einem Gewichtsverhältnis 3:1 gemischt ("Abstimmung") und in der Blasleitung über die Düsen 4a bis 4c auf die Holzfasern aufgetragen werden. Trotz dieser Verfahrensänderung können nahezu idente Werte wie in Beispiel 1 erzielt werden, was wiederum auf die aufeinander abgestimmte chemische und physikalische Wechselwirkung der eingesetzten Melamin- und Phenol-Formaldehydharze und die dadurch erzielte Faserimprägnierung und mehrfache Ummantelung der Holzfasern, beispielsweise hinsichtlich Naßfestigkeit, zurückzuführen ist.

### Beispiel 3:

Es werden Holzfaser-Halbteile und anschließend Holzfaser-Compactplatten, wie in Beispiel 2 angeführt, hergestellt, wobei von demselben Gesamtbeleimungsgrad - 50% Festharz bezogen auf atro Holz - und denselben Verhältniszahlen ausgegangen wird.

Der Unterschied zu Beispiel 2 besteht darin, daß Melamin- und Phenoiformaldehydharz als Mischkondensationsharz (Copolymerisat), wie an sich bekannt, mit Formaldehyd im entsprechenden molaren Verhältnis chemisch umgesetzt wird, wobei das Gewichtsverhältnis im Mischkondensationsharz zwischen Melamin- und Phenolformaldehydharz von 3:1 gewahrt bleibt und dieses über die Düsen 4a bis 4c auf die Holzfasern aufgetragen wird.

Trotz dieser Verfahrensänderung können nahezu idente Werte, beispielsweise hinsichtlich Naßfestigkeit, wie in den Beispielen 1 und 2 erzielt werden, was wiederum auf die abgestimmte chemische und physikalische Wechselwirkung bedingt durch die ausgewählten molaren Anteile im Mischkondensationsharz (Copolymerisat) und die dadurch erzielte Imprägnierung und mehrfache Ummantelung der Holzfasern zurückzuführen ist.

Die erfindungsgemäßen Holzfaser-Halbteile sind auch bei wechselnden klimatischen Bedingungen dimensionsstabil, was auf die Wechselwirkung zwischen den Holzfasern und dem Beleimungsmittel in Form von Kondensationsharzgemischen oder Mischkondensationsharzen (Copolymerisaten) zurückzuführen ist. Aus diesen Halbteilen hergestellte Holzfaser-Compactplatten werden im Bereich Innen- und Außenanwendung eingesetzt.

Die Platten können mit Dekorpapieren belegt werden, auf welche jedoch im technischen Bereich durchaus verzichtet werden kann, ohne die vorgenannten Eigenschaften negativ abzuändern.

Ferner ist es auch möglich, die Holzfaser-Compactplatten in an sich bekannter Weise zu verformen.

Zusammenfassend kann ein Beispiel der Erfindung wie folgt beschrieben werden:

Die Erfindung betrifft Holzfaser-Halbteile bestehend im wesentlichen aus gepreßten Holzfasern, die mit hitzegehärteten Kondensationsharzen umgeben sind. Der Beleimungsgrad der Holzfasern beträgt dabei 30 bis 60% Festharz in Form von Kondensationsharzgemischen oder Mischkondensationsharzen (Copolymerisaten) bezogen auf 100% atro-Fasern, wobei der Festharzanteil an Melamin-Formaldehydharz als Kondensationsharz maximal 45% bezogen auf atro-Holz und der Festharzanteil an Phenol-Formaldehydharz als weiteres Kondensationsharz kleiner als 15% bezogen auf atro-Holz beträgt. Die erfindungsgemäßen Holzfaser-Halbteile sind auch bei wechselnden klimatischen Bedingungen dimensionsstabil, was auf die abgestimmte chemische und physikalische Wechselwirkung zwischen den Holzfasern und dem Beleimungsmittel in Form von speziellen Kondensationsharzgemischen oder Mischkondensationsharzen (Copolymerisaten) zurückzuführen ist. Die aus diesen Halbteilen hergestellten Holzfaser-Compactplatten werden im Bereich Innen- und Außenanwendung eingesetzt.

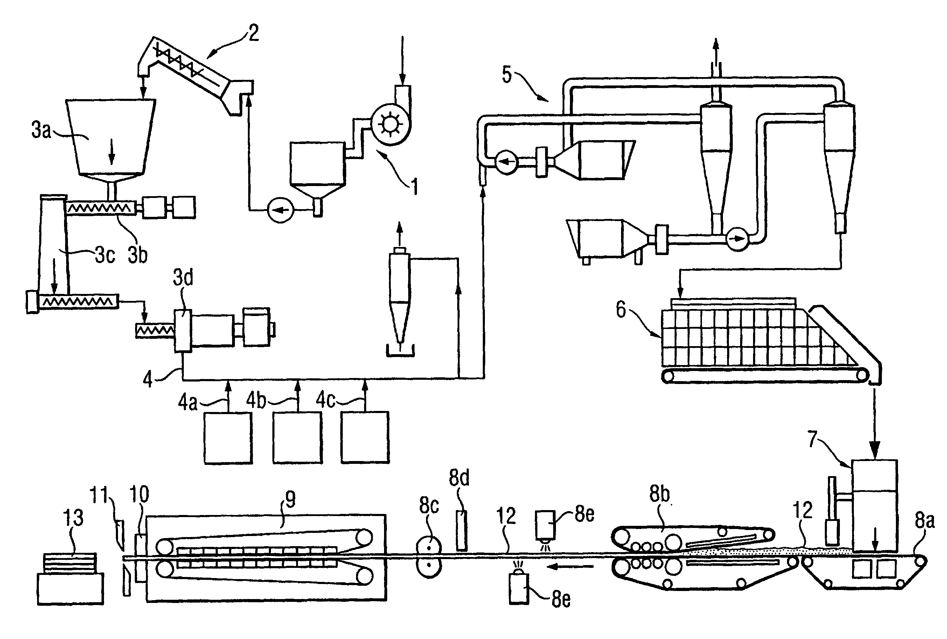

## Patentansprüche

1. Holzfaser-Halbteil, der gepreßten Holzfasern enthält, die von hitzehärtbaren Kondensationsharzen umgeben sind, **dadurch gekennzeichnet, daß** der Beleimungsgrad der Holzfasern 30 bis 60% Festharz in Form von Kondensations-harzgemischen oder Mischkondensationsharzen (Copolymerisaten) bezogen auf atro-Holzfasern beträgt, und daß der Festharzanteil an Melamin-Formaldehydharz als Kondensationsharz maximal 45% bezogen auf atro-Holzfasern und der Festharzanteil an Phenol-Formaldehydharz als weiteres Kondensationsharz kleiner als 15% bezogen auf atro-Holzfasern beträgt, und daß die mit hitzehärtbaren Melamin- und Phenol-Formaldehydharzen umgebenen Holzfasern zusätzlich mit einer Wachsschicht umhüllt sind.

2. Holzfaser-Halbteil nach Anspruch 1, **dadurch gekennzeichnet, daß** die durchschnittliche Länge der Holzfasern in einem Bereich von 1,0 bis 1,4 mm liegt, und daß der mittlere Durchmesser der Holzfasern 0,02 mm beträgt.

3. Holzfaser-Halbteil nach Anspruch 1 oder 2, **dadurch gekennzeichnet, daß** die Dichte des Holzfaser-Halbteils in einem Bereich von 800 bis 1000 kg/m3 liegt.

4. Verfahren zur Herstellung von Holzfaser-Halbteilen, bei welchem das Rohmaterial einer Zerfaserung unterworfen, anschließend in einer Blasleitung mit Kondensationsharzen beleimt und das so erhaltene, beleimte Fasermaterial nach Trocknung auf die erforderliche Restfeuchte zu Mattenbahnen gestreut und unter Druck und Temperatur zum Halbteil verpreßt wird, **dadurch gekennzeichnet, daß** die Holzfasern innerhalb der Blasleitung ein mit 30 - 60% Festharz in Form von Kondensationsharzgemischen oder Mischkondensatiosharzen (Copolymerisate) bezogen auf atro-Holzfasern beleimt werden und daß die Kondensationsharze innerhalb der Blasleitung derart auf den Holzfasern verteilt werden, daß der Festharzanteil an Melamin-Formaldehydharz als Kondensationsharz maximal 45% und der Festharzanteil an Phenol-Formaldehydharz als weiteres Kondensationsharz kleiner als 15% bezogen auf atro-Holzfasernfasern ist, und daß in der Blasleitung eine Wachsemulsion auf die mit Melamin- und Phenol-Formaldehydharzen beleimten Holz-Fasern aufgetragen wird.

5. Verfahren nach Anspruch 4, **dadurch gekennzeichnet, daß** der Auftrag an Melamin- und Phenol-Formaldehydharzen in der Blasleitung in Form einer Mischung oder nacheinander als Einzelkomponenten oder in Form von Mischkondensationsharzen (Copolymerisaten) erfolgt.

6. Holzfaser-Compactplatte mit ein- oder beidseitigen angebrachten Dekorpapier-Lagen, **dadurch gekennzeichnet, daß** die Holzfasercompactplatte wenigstens ein Holzfaser-Halbteil gemäß einem der Ansprüche 1 bis 3 enthält, und daß die Kondensationsharze an den beleimten Holzfasern durch Verpressen mit wenigstens einer Dekorpapierlage bei erhöhtem Druck und erhöhter Temperatur vom B-Zustand in den C-Zustand übergeführt worden sind.

7. Holzfaser-Compactplatte nach Anspruch 6, **dadurch gekennzeichnet, daß** das oder die Holzfaser-Halbteile ein- oder beidseitig mit Phenolharz-imprägnierten Natronkraftpapieren umgeben sind, welche nach Aushärtung wasserabweisende Verbundfilme sind.

## Claims

1. Wood-fibre semi-finished product, which contains compressed wood fibres which are surrounded by thermosetting condensation resins, **characterised in that** the degree of gluing of the wood fibres is 30 to 60% solid resin in the form of condensation resin mixtures or mixed condensation resins (copolymers) in relation to dry wood fibres, and **in that** the solid-resin proportion of melamine-formaldehyde resin as a condensation resin is at the most 45% in relation to dry wood fibres and the solid-resin proportion of phenol-formaldehyde resin as an additional condensation resin is less than *15%* in relation to dry wood fibres, and **in that** the wood fibres which are surrounded with thermosetting melamine- and phenol-formaldehyde resins are additionally coated with a wax layer.

2. Wood-fibre semi-finished product according to claim 1, **characterised in that** the average length of the wood fibres lies in a range between 1.0 and 1.44 mm, and **in that** the mean diameter of the wood fibres is 0.02 mm.

3. Wood-fibre semi-finished product according to claim 1 or 2, **characterised in that** the density of the wood-fibre semi-finished product lies in a range between 800 and 1000 kg/m³.

4. Method of producing wood-fibre semi-finished products, in which the raw material is subjected to pulping, then coated with condensation resins in a blow line and the resin-coated fibrous material thus obtained, after being dried to the necessary residual moisture, is scattered to form mat lengths and compressed under pressure and at high temperature to form the semi-finished product, **characterised in that** the wood fibres are coated within the blow line with 30 - 60% solid resin in the form of condensation resin mixtures or mixed condensation resins (copolymers) in relation to dry wood fibres, and **in that** the condensation resins are distributed on the wood fibres inside the blow line in such a way, that the solid-resin proportion of melamine-formaldehyde resin as a condensation resin is at the most 45% and the solid-resin proportion of phenol-formaldehyde resin as an additional condensation resin is less than 15% in relation to dry wood fibres, and **in that** in the blow line a wax emulsion is applied to the wood fibres which are coated with melamine- and phenol-formaldehyde resins.

5. Method according to claim 4, **characterised in that** the melamine- and phenol-formaldehyde resins are applied in the blow line in the form of a mixture or in succession as individual components or in the form of mixed condensation resins (copolymers).

6. Wood-fibre compact board having decorative paper layers attached to one or both sides, **characterised in that** the wood-fibre compact board contains at least one wood-fibre semi-finished product according to one of claims 1 to 3, and **in that** the condensation resins on the resin-coated wood fibres are transferred from the B-state to the C-state by being pressed with at least one decorative paper layer at a raised pressure and raised temperature.

7. Wood-fibre compact board according to claim 6, **characterised in that** the wood-fibre semi-finished product or products is/are enclosed on one or both sides by sulphate kraft papers impregnated with phenol resin, which after curing are water-repellent composite films.

## Revendications

1. Pièce semi-finie à base de fibres de bois, comprenant des fibres de bois comprimées entourées de résines de condensation thermodurcissables, **caractérisée par le fait que** le taux d'encollage des fibres est compris entre 30 et 60 % de résine solide, sous forme de mélanges de résines de condensation ou sous forme de résines de condensation mixtes (copolymères), rapporté aux fibres de bois sèches, et que la teneur de la résine solide en résine mélamine-formaldéhyde en tant que résine de condensation est au plus égale à 45 % rapporté aux fibres de bois sèches, et que la teneur de la résine solide en résine phénol-formaldéhyde, en tant qu'autre résine de condensation, est inférieure à 15 % rapportée aux fibres de bois sèches, et que les fibres de bois entourées de résines mélamine-formaldéhyde et de phénol-formaldéhyde thermodurcissables sont entourées en outre d'une couche de cire.

2. Pièce semi-finie à base de fibres de bois selon la revendication 1, **caractérisée par le fait que** la longueur moyenne des fibres de bois est comprise dans l'intervalle allant de 1,0 à 1,4 mm, et que le diamètre moyen des fibres de bois est de 0,02 mm.

3. Pièce semi-finie à base de fibres de bois selon la revendication 1 ou 2, **caractérisée par le fait que** la masse volumique de la pièce semi-finie à base de fibres de bois est comprise dans l'intervalle allant de 800 à 1000 kg/m³.

4. Procédé de fabrication de pièces semi-finies à base de fibres de bois, dans lequel la matière brute est soumise à un effilochage, est ensuite encollée dans une conduite de soufflage avec des résines de condensation, et le matériau fibreux encollé ainsi obtenu est, après séchage jusqu'au taux d'humidité résiduel nécessaire, étalé en bandes qui sont comprimées par application de pression et de chaleur de manière à donner une pièce semi-finie, **caractérisé par le fait que** les fibres de bois sont, dans la conduite de soufflage, encollées avec de 30 à 60 % de résine solide, sous forme de mélanges de résines de condensation ou sous forme de résines de condensation mixtes (copolymère), rapporté aux fibres de bois sèches, et que les résines de condensation sont réparties sur les fibres de bois à l'intérieur de la conduite de soufflage d'une façon telle que la teneur de la résine solide en résine mélamine-formaldéhyde en tant que résine de condensation est au plus égale à 45 % rapporté aux fibres de bois sèches et que la teneur de la résine solide en résine phénol-formaldéhyde, en tant qu'autre résine de condensation, est inférieure à 15 % rapporté aux fibres de bois sèches, et qu'une émulsion de cire est appliquée, à l'intérieur de la conduite de soufflage, sur les fibres de bois encollées de résine mélamine-formaldéhyde et de résine phénol-formaldéhyde.

5. Procédé selon la revendication 4, **caractérisé par le fait que** les résines mélamine-formaldéhyde et phénol-formaldéhyde sont appliquées, dans la conduite de soufflage, simultanément sous forme de mélange ou successivement l'une après l'autre ou sous forme de résine de condensation mixte (copolymère).

6. Plaque compacte à base de fibres de bois comportant, sur une face ou sur les deux faces, des couches de papier décoratif, **caractérisée par le fait que** la plaque compacte à base de fibres de bois comprend au moins une pièce semi-finie selon l'une des revendications 1 à 3, et que les résines de condensation sur les fibres de bois encollées ont été amenées par collage d'une couche de papier décoratif, sous pression et température élevées, d'un état B vers un état C.

7. Plaque compacte à base de fibres de bois selon la revendication 6, **caractérisée par le fait que** la ou les pièces semi-finies à base de fibres de bois sont couvertes, sur une face ou sur les deux faces, de papier kraft à la soude, imprégné de résine phénolique, qui, après durcissement, forme un film composite hydrofuge.
